# EUROPÄISCHE PATENTANMELDUNG

(11) **EP 3 252 931 A1**
(43) Veröffentlichungstag der Anmeldung: **06.12.2017**
(21) Anmeldenummer: 16171876.2
(22) Anmeldetag: 30.05.2016
(51) Int. Cl.: H02K 5/173, H02K 11/215, H02K 5/15, H02K 5/20

(54) **LAGERSCHILD FÜR EINEN BÜRSTENLOSEN ELEKTROMOTOR**

(71) Anmelder: HILTI Aktiengesellschaft, 9494 Schaan (LI)
(72) Erfinder: Mahler, Thomas, 18299 Laage (DE); Jakob, Manfred, 86916 Kaufering (DE); Tussing, Torsten, 86899 Landsberg am Lech (DE)
(74) Vertreter: Hilti Aktiengesellschaft Corporate Intellectual Property

(57) **Zusammenfassung**

Nichtabtriebsseitiges Lagerschild (100) für einen bürstenlosen Elektromotor (500), mit einem zentral angeordneten Lagersitz (110) zur Aufnahme eines nichtabtriebsseitigen Rotorlagers (510) für eine Rotorwelle (560) des bürstenlosen Elektromotors (500), wobei das nichtabtriebsseitige Lagerschild (100) eine Sensoraufnahme (150) aufweist, die als Träger für eine Sensorplatine (550) zur Drehlagenerfassung der Rotorwelle (560) dient, wobei das nichtabtriebsseitige Lagerschild (100) und die Sensoraufnahme (150) zusammen als einteiliges Bauteil ausgebildet sind.

## Beschreibung

Die vorliegende Erfindung betrifft ein nichtabtriebsseitiges Lagerschild für einen bürstenlosen Elektromotor, mit einem zentral angeordneten Lagersitz zur Aufnahme eines nichtabtriebsseitigen Rotorlagers für eine Rotorwelle des bürstenlosen Elektromotors. Die Erfindung betrifft ebenfalls einen bürstenlosen Elektromotor mit einem nichtabtriebsseitigen Lagerschild.

Nichtabtriebsseitige Lagerschilde sowie bürstenlose Elektromotoren mit nichtabtriebsseitigen Lagerschilden sind grundsätzlich aus dem Stand der Technik bekannt. Nichtabtriebsseitige Lagerschilde dienen insbesondere zur Aufnahme und Lagerung einer Rotorwelle des bürstenlosen Elektromotors. Diese muss bezüglich eines Statorblechpakets des bürstenlosen Elektromotors hinreichend genau positioniert und ausgerichtet sein. Gleichzeitig ist es wünschenswert, dass eine Sensorplatine zur Drehlagenerfassung der Rotorwelle ihrerseits hinreichend genau positioniert und ausgerichtet ist um eine möglichst exakte Kommutierung des bürstenlosen Elektromotors zu ermöglichen.

Es ist Aufgabe der vorliegenden Erfindung ein nichtabtriebsseitiges Lagerschild bereitzustellen, dass eine genaue Positionierung und Ausrichtung einer Rotorwelle bzw. einer Sensorplatine begünstigt.

Die Aufgabe wird dadurch gelöst, dass das nichtabtriebsseitige Lagerschild eine Sensoraufnahme aufweist, die als Träger für eine Sensorplatine zur Drehlagenerfassung der Rotorwelle dient, wobei das nichtabtriebsseitige Lagerschild und die Sensoraufnahme zusammen als einteiliges Bauteil ausgebildet sind.

In einer besonders bevorzugten Ausgestaltung weist das nichtabtriebsseitige Lagerschild drei gleichmäßig voneinander beabstandete Einschubelemente auf, die zur zumindest abschnittsweisen Aufnahme in einer zum jeweiligen Einschubelement korrespondierenden Einschuböffnung, die einem Statorblechpaket des Elektromotors zugehörig ist, ausgebildet sind.

Diesbezüglich wurde erkannt, dass eine genaue Positionierung und Ausrichtung des nichtabtriebsseitigen Lagerschilds zu dem Statorblechpaket, der Rotorwelle, der Sensorplatine sowie bezüglich eines Sensormagnetrings eine besondere technische Herausforderung ist. Typischerweise sind geforderte Toleranzen sehr gering, so dass die genaue Positionierung und Ausrichtung des nicht abtriebsseitigen Lagerschild viel Zeit und damit Geld in der Produktion eines bürstenlosen Elektromotors beansprucht.

Insbesondere wurde erkannt, dass es bei einem sequenziellen Zusammenbauen einzelner Bauteile des bürstenlosen Elektromotors, d.h. insbesondere beim Fügen des nichtabtriebsseitigen Lagerschild zum Statorblechpaket, der Rotorwelle, der Sensorplatine sowie dem Sensormagnetring oftmals zu einer unvermeidlichen Fehlerkette kommen kann, die die geforderten Toleranzen überschreitet. Es hat sich gezeigt dass bei nichtabtriebsseitigen Lagerschilden des Standes der Technik insbesondere die Abstimmung des Sensormagnetring und der Sensorplatine negativ betroffen sind. Dementsprechend werden bürstenlose Elektromotoren des Standes der Technik, die herkömmliche nichtabtriebsseitige Lagerschild aufweisen häufig nicht optimal kommutiert.

Durch die drei gleichmäßig voneinander beabstandeten Einschubelemente, die am nichtabtriebsseitigen Lagerschild angeordnet sind, wobei das nicht abtriebsseitige Lagerschild und die Sensoraufnahme zusammen als einteiliges Bauteil ausgebildet sind, wird die genaue Positionierung und Ausrichtung der beschriebenen Bauteile deutlich erleichtert.

Es hat sich als vorteilhaft herausgestellt wenn das nichtabtriebsseitige Lagerschild genau drei gleichmäßig voneinander beabstandete Einschubelemente aufweist, die als einteiliges Bauteil mit dem nichtabtriebsseitigen Lagerschild ausgebildet sind.

Das nichtabtriebsseitige Lagerschild kann aus Kunststoff gefertigt sein, beispielsweise mittels Spritzguss. Alternativ dazu kann das nichtabtriebsseitigen Lagerschild aus Metall gefertigt sein, beispielsweise aus Aluminium, vorzugsweise mittels Fräsen.

Es hat sich als vorteilhaft herausgestellt, wenn jedes der Einschubelemente eine radial orientierte und vorzugsweise plane Zentrierfläche aufweist, die zur konzentrischen Zentrierung des Einschubelements bezüglich des Statorblechpakets vorgesehen ist. Vorzugsweise liegt die Zentrierfläche im Einbauzustand an einer Radialstützfläche des Statorblechpakets an.

In einer weiteren bevorzugten Ausgestaltung weist jedes der Einschubelemente zwei tangential orientierte und vorzugsweise plane Zentrierflächen auf, die zur Winkelausrichtung des Einschubelements bezüglich des Statorblechpakets vorgesehen sind. Vorzugsweise liegen die planen Zentrierflächen im Einbauzustand an einer jeweiligen Tangentialstützfläche des Statorblechpakets an. Unter einer Winkelausrichtung ist im Rahmen der vorliegenden Erfindung eine Ausrichtung des nichtabtriebsseitigen Lagerschild bezüglich des Statorblechpakets zu verstehen, wobei der Winkel auf eine Drehrichtung der Rotorwelle bezogen ist.

In einer ebenfalls bevorzugten Ausgestaltung weist jedes der Einschubelemente eine axial orientierte und vorzugsweise plane Auflagefläche auf, die zum Einhalten einer definierten axialen Lage zwischen dem nichtabtriebsseitigen Lagerschild bezüglich des Statorblechpakets vorgesehen ist. Vorzugsweise liegt die plane Auflagefläche im Einbauzustand an einer vorzugsweise planen Axialstützfläche des Statorblechpakets an.

Unter einem Einbauzustand soll im Rahmen der vorliegenden Erfindung ein solcher Zustand verstanden werden, bei dem das nichtabtriebsseitige Lagerschild an einem Statorblechpaket des bürstenlosen Elektromotors angeordnet ist, mit anderen Worten der bürstenlose Elektromotor betriebsbereit ist.

Es hat sich als vorteilhaft herausgestellt, wenn das nichtabtriebsseitige Lagerschild drei gleichmäßig voneinander beabstandete Halteelemente aufweist. Die Halteelemente bilden vorzugsweise jeweils einen Aufstand für eine Spannschraube, die zum Verbinden des nichtabtriebsseitigen Lagerschilds mit einem abtriebsseitigen Lagerschild vorgesehen ist.

Es hat sich als vorteilhaft herausgestellt, wenn das nichtabtriebsseitige Rotorlager als Rollen-Festlager ausgebildet ist.

Die Erfindung wird ebenfalls gelöst durch einen bürstenlosen Elektromotor mit einem Statorblechpaket, einem abtriebsseitigen Lagerschild, einem vorbeschriebenen nicht abtriebsseitigen Lagerschild und einer Rotorwelle, die in einem abtriebsseitigen Rotorlager des abtriebsseitigen Lagerschild gelagert ist. Vorzugsweise ist das abtriebsseitige Rotorlager als Rollen-Loslager ausgebildet.

Es hat sich als vorteilhaft herausgestellt, wenn der bürstenlose Elektromotor eine in der Sensoraufnahme aufgenommenen Sensorplatine zur Drehlagenerfassung der Rotorwelle aufweist. Vorzugsweise ist die Sensorplatine zwischen dem nichtabtriebsseitigen Lagerschild und dem abtriebsseitigen Lagerschild angeordnet.

Es hat sich ebenfalls als vorteilhaft herausgestellt, wenn die Sensorplatine zwischen einer Unterseite des Lagerschilds und dem Statorblechpaket angeordnet ist. Unter einer Unterseite des Lagerschilds solle die Seite des Lagerschilds zu verstehen sein, die im bestimmungsgemäßen Betrieb dem abtriebsseitigen Lagerschild zugewandt ist.

Eine Anordnung der Sensorplatine zwischen dem nichtabtriebsseitigen Lagerschild und dem abtriebsseitigen Lagerschild hat den Vorteil, dass eine kürzere Gesamtlänge des bürstenlosen Elektromotors erreicht werden kann. Vorzugsweise ist am nicht abtriebsseitigen Lagerschild für diesen Zweck eine Ausnehmung vorgesehen in der die Sensorplatine und/oder der Sensormagnetring aufgenommen ist bzw. aufgenommen werden kann.

Alternativ zu einer Anordnung der Sensorplatine zwischen dem nichtabtriebsseitigen Lagerschild und dem abtriebsseitigen Lagerschild kann die Sensorplatine auf einer dem abtriebsseitigen Lagerschild abgewandten Seite des nichtabtriebsseitigen Lagerschilds angeordnet sein. Gleichsam kann der Sensormagnetring auf der dem abtriebsseitigen Lagerschild abgewandten Seite des nichtabtriebsseitigen Lagerschilds angeordnet sein.

Diesbezüglich wurde erkannt, dass die Sensorplatine bzw. der Sensormagnetring durch ein unerwünschtes Störmagnetfeld einer Spulenwicklung des Stators abgeschirmt ist. Dies führt zu einer verbesserten Messwertaufname von vorzugsweise vorgesehen Hallsensoren auf der Sensorplatine, was letztendlich die Kommutierung des bürstenlosen Elektromotors weiter verbessert.

In einer weiteren bevorzugten Ausgestaltung weist der bürstenlose Elektromotor einen abtriebsseitig angeordneten Lüfter auf.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
Figur 1 ein bevorzugtes Ausführungsbeispiel eines bürstenlosen Elektromotors in perspektivische Darstellung;
Figur 2 ein bevorzugtes Ausführungsbeispiel eines erfindungsgemäßen nichtabtriebsseitigen Lagerschilds in perspektivische Darstellung;
Figur 3 den bürstenlosen Elektromotor der Figur 1 in einer Schnittdarstellung;
Figur 4 das nichtabtriebsseitige Lagerschild der Figur 2 angeordnet an einem Statorblechpaket eines bürstenlosen Elektromotors (vergleiche Figur 1);
Figur 5 eine weitere Schnittdarstellung durch den bürstenlosen Elektromotor der Figur 1; und
Figur 6 ein Statorblechpaket des bürstenlosen Elektromotors der Figur 1 in perspektivischer Darstellung.

### Ausführungsbeispiele:

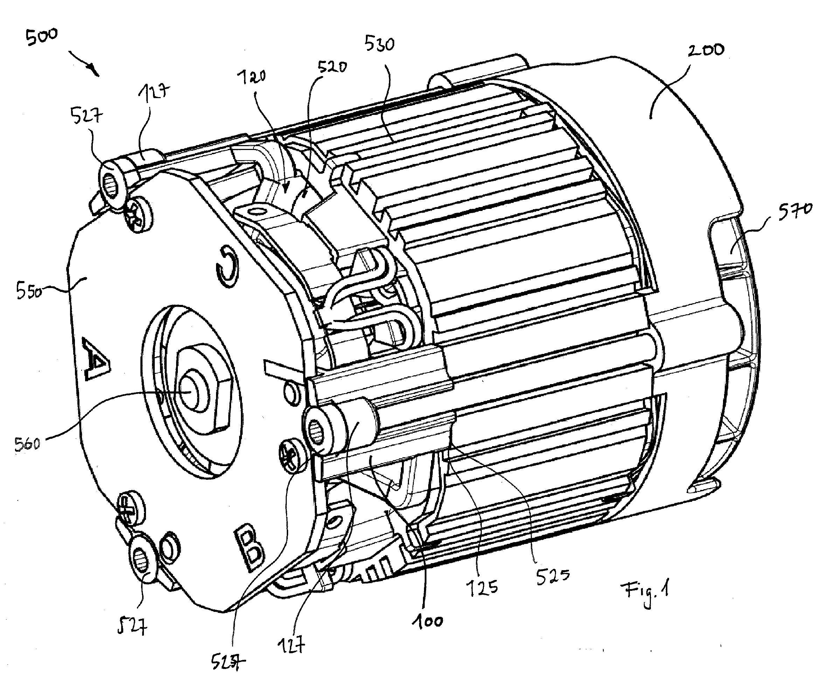

Figur 1 zeigt ein bevorzugtes Ausführungsbeispiel eines erfindungsgemäßen bürstenlosen Elektromotors 500. Der bürstenlose Elektromotor 500 weist einen Statorblechpaket 530, ein abtriebsseitiges Lagerschild 200 und eine zentral angeordnete Rotorwelle 560 auf. Ebenfalls vorgesehen am bürstenlosen Elektromotor 500 der Figur 1 ist ein abtriebsseitig angeordneter Lüfter 570.

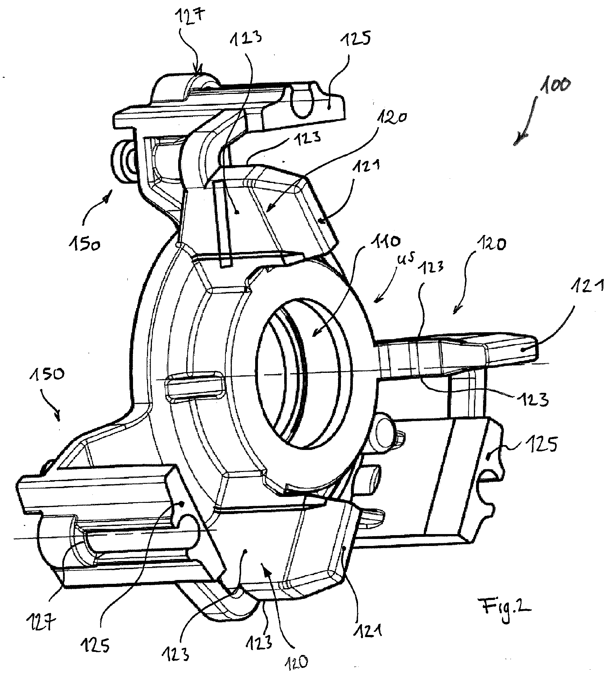

Da Figur 1 einen betriebsbereit montierten bürstenlosen Elektromotor 500 zeigt, ist das nichtabtriebsseitige Lagerschild 100 nicht in Gänze dargestellt. Eine genauere Erläuterung des nichtabtriebsseitigen Lagerschilds 100 folgt mit Bezug auf Figur 2.

Aus Figur 1 wiederum ersichtlich ist, dass eine Sensorplatine 550 auf der dem abtriebsseitigen Lagerschild 200 abgewandten Seite des nichtabtriebsseitigen Lagerschilds 100 aufgenommen ist. Die Sensorplatine 550 dient der Drehlagenerfassung der Rotorwelle 560.

Das nichtabtriebsseitige Lagerschild 100 weist drei gleichmäßig voneinander beabstandete Halteelelemente 127 auf, die jeweils einen Aufstand für eine Spannschraube 527 bilden. Mittels der Spannschrauben 527 sind das nichtabtriebsseitige Lagerschild 100 und das abtriebsseitige Lagerschild 200 miteinander verbunden.

Bereits angedeutet in Figur 1 ist eines der drei Einschubelemente 120, die im folgenden mit Bezug auf Figur 2 beschriebenen soll.

Figur 2 zeigt ein bevorzugtes Ausführungsbeispiel eines erfindungsgemäßen nichtabtriebsseitigen Lagerschilds 100. Das nichtabtriebsseitige Lagerschild 100 weist eine Sensoraufnahme 150 auf, die als Träger für eine Sensorplatine 550 (vergleiche Figur 1) dient. Das nichtabtriebsseitige Lagerschild 100 und die Sensoraufnahme 150 sind zusammen als einteiliges Bauteil ausgebildet. Im vorliegend dargestellten Ausführungsbeispiel ist das nichtabtriebsseitige Lagerschild 100 aus einem Metallblock gefräst.

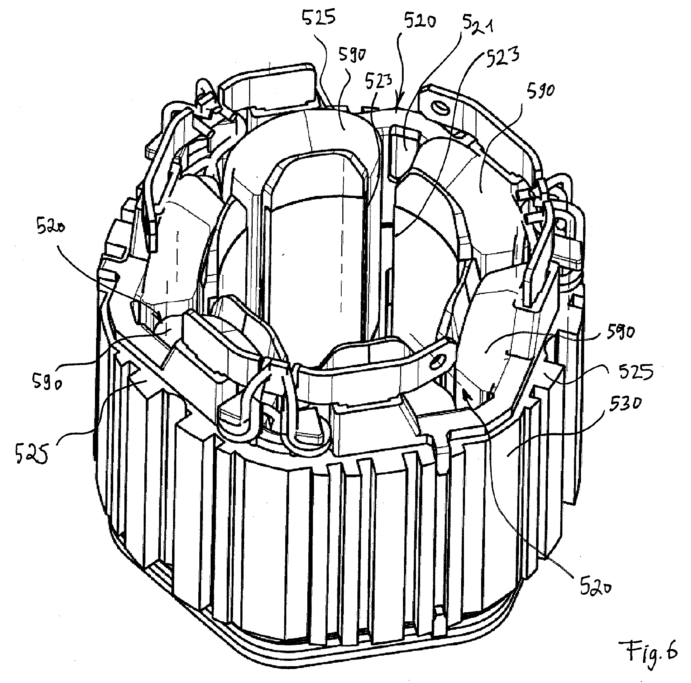

Wie der Figur 2 entnommen werden kann, weist das nicht abtriebsseitige Lagerschild 100 genau drei gleichmäßig voneinander beabstandete Einschubelemente 120 auf. Die drei gleichmäßig voneinander beabstandeten Einschubelemente 120 sind zur zumindest abschnittsweisen Aufnahme in zum jeweiligen Einschubelement 120 korrespondierenden Einschuböffnungen 530 (vergleiche Figur 6), die in einem Statorblechpaket 530 ausgebildet sind, ausgebildet.

Das nichtabtriebsseitige Lagerschild 100 der Figur 2 weist eine Vielzahl von konstruktiv ausgebildeten Flächen auf mit den die genaue Positionierung und Ausrichtung erleichtert wird. Diese Flächen sollen im Folgenden genauer beschrieben werden.

Zunächst weist jedes der Einschubelemente 120 eine Reihe radial orientierte und vorliegend plane Zentrierfläche 121 auf, die zur konzentrischen Zentrierung des Einschubelements 120 bezüglich des Statorblechpakets 530 (vergleiche Figur 6) vorgesehen ist. Im Einbauzustand liegt jede der planen Zentrierflächen 121 an einer korrespondierenden Radialstützfläche 521 des Statorblechpakets 530 an (vergleiche Figur 6).

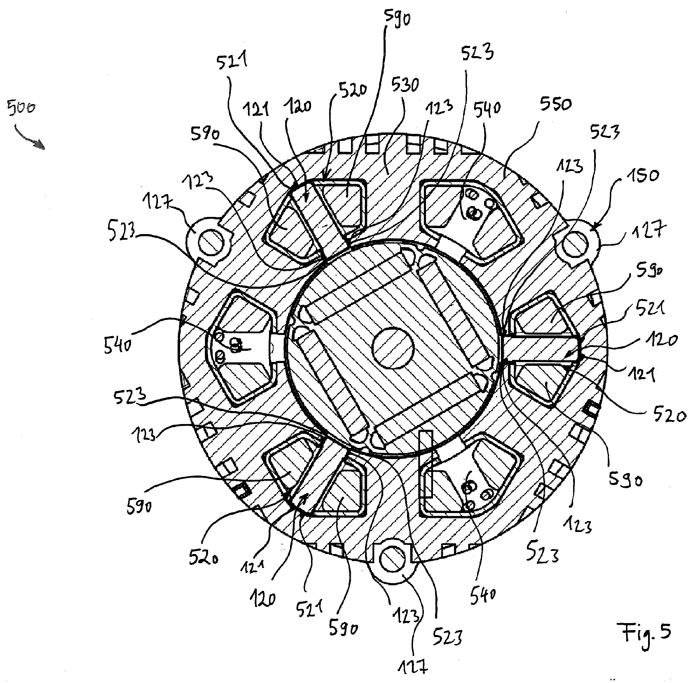

Ferner weist jedes der Einschubelemente 120 zwei tangential orientierte und vorliegend plan ausgebildet Zentrierflächen 123 auf. Die planen Zentrierflächen 123 dienen zur Winkelausrichtung des Einschubelements 120 bezüglich des Statorblechpakets 530. Im Einbauzustand (vergleiche Figur 5) liegen die plane Zentrierflächen 123 an einer jeweiligen Tangentialstützfläche 523 des Statorblechpakets 530 an.

Schließlich weist jedes der Einschubelemente 120 eine axial orientierte und vorliegend plan ausgebildete Auflagefläche 125 auf, die zum Einhalten einer definierten axialen Lage zwischen dem nicht abtriebsseitigen Lagerschild 100 bezüglich des Statorblechpakets 530 vorgesehen ist. Wie bereits der Figur 1 entnommen werden kann liegt die plane Auflagefläche 125 an einer planen Axialstützfläche 525 des Statorblechpakets 530 an.

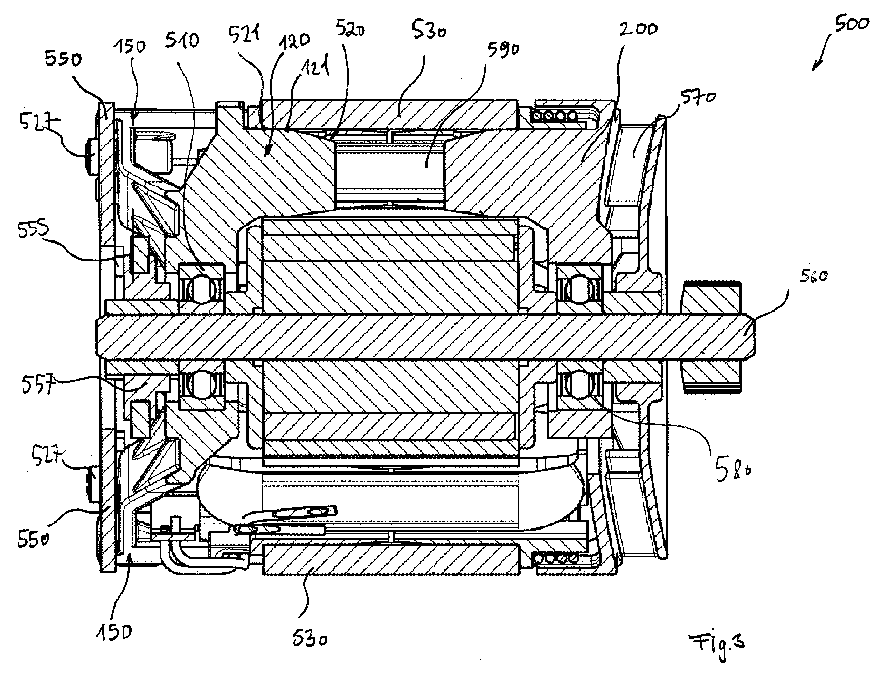

Figur 3 zeigt eine Schnittdarstellung in Längsrichtung durch den bürstenlosen Elektromotor 500 der Figur 1. Wie der Figur 3 entnommen werden kann, weist das nichtabtriebsseitige Lagerschild 100 eine Sensoraufnahme 150 auf, die als Träger für die Sensorplatine 550 zur Drehlagenerfassung der Rotorwelle 560 dient. Das nichtabtriebsseitige Lagerschild 100 und die Sensoraufnahme 150 sind zusammen als einteiliges Bauteil ausgebildet, was vorliegend durch die Schraffur erkennbar ist.

Insbesondere gut zu erkennen in Figur 3 ist eine plan ausgebildete und radial orientierte Zentrierfläche 121 des Einschubelements 120, die zur konzentrischen Zentrierung des Einschubelements 120 bezüglich des Statorblechpakets 530 vorgesehen ist. Im in Figur 3 gezeigten Einbauzustand stützt sich die plane und radial orientierte Zentrierfläche 121 an einer Radialstützfläche 521 des Statorblechpakets 530 ab.

Im vorliegend dargestellten Ausführungsbeispiel ist die Sensorplatine 550 Träger eines Hallsensors 555, der mit einem Sensormagnetring 557 zwecks Drehlagenerfassung der Rotorwelle 560 zusammenwirkt.

Wie ebenfalls der Figur 3 entnommen werden, kann ist die Sensorplatine 550 auf einer dem abtriebsseitigen Lagerschild 200 abgewandten Seite des nichtabtriebsseitigen Lagerschilds 100 angeordnet. Dies ermöglicht eine gewisse Abschirmung des Hallsensors 555 von einer Magnetfeldwirkung der Statorspulenwicklungen 590.

Die Rotorwelle 560 des bürstenlosen Elektromotors 500 der Figur 3 ist innerhalb des nicht abtriebsseitigen Lagerschild 100 in einem als Rollen-Festlager ausgebildeten nicht abtriebsseitigen Rollenrotorlager 510 gelagert. Abtriebsseitig ist die Rotorwelle 560 in einem abtriebsseitigen Rotorlager 580 gelagert, wobei das abtriebsseitige Rotorlager 580 als Rollen-Loslager ausgebildet ist.

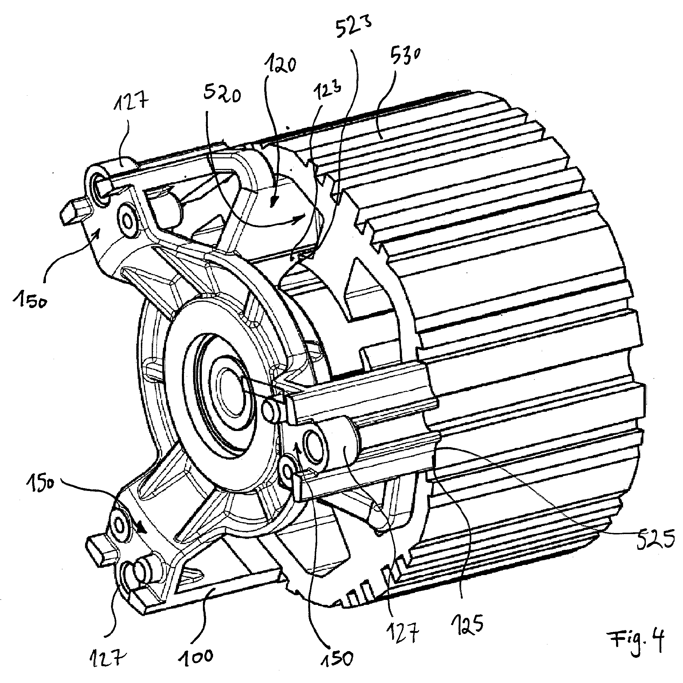

Figur 4 zeigt freigestellt das nichtabtriebsseitige Lagerschild 100 im Einbauzustand, das heißt angeordnet an einem Statorblechpaket 530. Gut zu erkennen ist hier die einteilige Ausbildung des nichtabtriebsseitigen Lagerschilds 100 mit der Sensoraufnahme 150 sowie den genau drei gleichmäßig voneinander beabstandete Einschubelementen 120. Ebenfalls gut zu erkennen ist, dass im Einbauzustand die Einschubelemente 120 zumindest abschnittsweise in einer korrespondierenden Einschuböffnung 520, die im Statorblechpaket 530 ausgebildet ist, aufgenommen sind.

Figur 5 zeigt einen Schnitt quer durch den Elektromotor 500 zur Verdeutlichung der Zentrierung des nichtabtriebsseitigen Lagerschilds 100 im Statorblechpaket 530. Gut zu erkennen sind die drei gleichmäßig voneinander beabstandete Einschubelemente 120 die, dies ist durch die Schnittdarstellung gut erkennbar, innerhalb eines Volumens des Statorblechpakets 530 verlaufen. Die radial orientierten Zentrierflächen 121 stützt sich an einer jeweiligen Radialstützfläche 521 des Statorblechpaket 530 ab.

Die beidseitig des Einschubelements 120 vorgesehenen tangential orientierten planen Zentrierflächen 123, die zur Winkelausrichtung dienen, liegen an jeweiligen Tangentialstützflächen 523 des Statorblechpakets an. In den drei Öffnungen des Statorblechpakets 530 in den kein Einschubelement 120 befindlich ist, ist ein jeweiliger Polzahn 540 des Elektromotors 500 dargestellt.

Figur 6 zeigt schließlich das Statorblechpaket 530 in perspektivischer Darstellung. Gut zu erkennen sind die genau drei gleichmäßig voneinander beabstandeten korrespondierenden Einschuböffnungen, in die die Einschubelemente 120 (vergleiche Figur 2) einzuführen sind.

Im vorliegend dargestellten Ausführungsbeispiel weist das Statorblechpaket genau sechs Statorspulenwicklungen 590 auf die gleichmäßig voneinander beabstandet entlang eines inneren Umfangs des Statorblechpakets 530 verlaufen. Zwischen zwei benachbarten Statorspulenwicklungen 590 sind, im Statorblechpaket 530 drei gleichmäßig voneinander beabstandete Radialstützflächen 521 ausgebildet.

Wie der Figur 6 entnommen werden kann, sind diese als radialer Vertiefungen innerhalb des Statorblechpakets 530 ausgebildet. Insgesamt sind genau drei Radialstützflächen 521 vorgesehen.

Im Ausführungsbeispiel der Figur 6 sind ebenfalls genau sechs Tangentialstützflächen 523 ausgebildet. Diese sind an einem jeweiligen Abschnitt des Statorblechpakets 530 angeordnet die die Statorspulenwicklung 590 nach innen begrenzt. Zwei benachbarte tangential Stützflächen 523 sind jeweils einem der Einschubelemente 120 (vergleiche Figur 2) zugeordnet.

Am äußeren Umfang des Statorblechpakets 530 ist schließlich die plane Axialstützfläche 525 erkennbar, die als Aufstand für die plane Auflagefläche 125 der Einschubelemente 120 (vergleiche Figur 2) fungiert. Die Axialstützfläche 525 wird durch ein planes Ende des Statorblechpakets 530 gebildet.

### Bezugszeichenliste

- 100: nichtabtriebsseitiges Lagerschild
- 110: Lagersitz
- 120: Einschubelement
- 121: radial orientierte Zentrierfläche
- 123: tangential orientierte Zentrierfläche
- 125: axial orientierte Auflagefläche
- 127: Halteelemente
- 150: Sensoraufnahme
- 200: abtriebsseitiges Lagerschild
- 500: Elektromotor
- 510: nichtabtriebsseitiges Rotorlager
- 520: korrespondierende Einschuböffnung
- 521: Radialstützfläche
- 523: Tantentialstützfläche
- 525: Axialstützfläche
- 527: Spannschraube
- 530: Statorblechpaket
- 540: Pohlzahn
- 550: Sensorplatine
- 555: Hallsensor
- 557: Sensormagnetring
- 560: Rotorwelle
- 570: Lüfter
- 580: abtriebsseitiges Rotorlager
- 590: Statorspulenwicklung
- US: Unterseite des Lagerschilds

## Patentansprüche

1. Nichtabtriebsseitiges Lagerschild (100) für einen bürstenlosen Elektromotor (500), mit einem zentral angeordneten Lagersitz (110) zur Aufnahme eines nichtabtriebsseitigen Rotorlagers (510) für eine Rotorwelle (560) des bürstenlosen Elektromotors (500), **dadurch gekennzeichnet, dass** das nichtabtriebsseitige Lagerschild (100) eine Sensoraufnahme (150) aufweist, die als Träger für eine Sensorplatine (550) zur Drehlagenerfassung der Rotorwelle (560) dient, wobei das nichtabtriebsseitige Lagerschild (100) und die Sensoraufnahme (150) zusammen als einteiliges Bauteil ausgebildet sind.

2. Nichtabtriebsseitiges Lagerschild (100) nach Anspruch 1,
**dadurch gekennzeichnet, dass** das nichtabtriebsseitigen Lagerschild (100) drei gleichmäßig voneinander beabstandete Einschubelemente (120) aufweist, die zur zumindest abschnittsweisen Aufnahme in einer zum jeweiligen Einschubelement (120) korrespondieren Einschuböffnung (520), die einem Statorblechpaket (530) des Elektromotors (500) zugehörig ist, ausgebildet sind.

3. Nichtabtriebsseitiges Lagerschild (100) nach Anspruch 2,
**dadurch gekennzeichnet, dass** jedes der Einschubelemente (120) eine radial orientierte und vorzugsweise plane Zentrierfläche (121) aufweist, die zur konzentrischen Zentrierung des Einschubelements (120) bezüglich des Statorblechpakets (530) vorgesehen ist und im Einbauzustand an einer Radialstützfläche (521) des Statorblechpakets (530) anliegt.

4. Nichtabtriebsseitiges Lagerschild (100) nach einem der Ansprüche 2 oder 3,
**dadurch gekennzeichnet, dass** jedes der Einschubelemente (120) zwei tangential orientierte und vorzugsweise plane Zentrierflächen (123) aufweist, die zur Winkelausrichtung des Einschubelements (120) bezüglich des Statorblechpakets (530) vorgesehen sind und im Einbauzustand an einer jeweiligen Tangentialstützfläche (523) des Statorblechpakets (530) anliegt.

5. Nichtabtriebsseitiges Lagerschild (100) nach einem der Ansprüche 2 bis 4,
**dadurch gekennzeichnet, dass** jedes der Einschubelemente (120) eine axiale orientierte und vorzugsweise plane Auflagefläche (125) aufweist, die zum Einhalten einer definierten axialen Lage zwischen dem nichtabtriebsseitigen Lagerschild (100) bezüglich des Statorblechpakets (530) vorgesehen ist und im Einbauzustand an einer vorzugsweise planen Axialstützfläche (525) des Statorblechpakets (530) anliegt.

6. Nichtabtriebsseitiges Lagerschild (100) nach einem der vorangehenden Ansprüche,
**dadurch gekennzeichnet, dass** das nichtabtriebsseitigen Lagerschild (100) drei gleichmäßig voneinander beabstandete Halteelemente (127) aufweist, die jeweils einen Aufstand für eine Spannschraube (527), die zum Verbinden des nichtabtriebsseitigen Lagerschilds (100) mit einem abtriebsseitigen Lagerschild (200) vorgesehen ist, aufweisen.

7. Nichtabtriebsseitiges Lagerschild (100) nach einem der vorangehenden Ansprüche,
**dadurch gekennzeichnet, dass** nichtabtriebsseitiges Rotorlager (510) als Rollen-Festlager ausgebildet ist.

8. Bürstenloser Elektromotor (500) mit einem Statorblechpaket (530), einem abtriebsseitigen Lagerschild (200), einem nichtabtriebsseitigen Lagerschild (100) nach einem der vorangehenden Ansprüche und einer Rotorwelle (560), die in einem abtriebsseitigen Rotorlager (580) des abtriebsseitigen Lagerschild (200) gelagert ist, wobei das abtriebsseitige Rotorlager (580) als Rollen-Loslager ausgebildet ist.

9. Bürstenloser Elektromotor (500) nach Anspruch 8,
**dadurch gekennzeichnet, dass** der bürstenlose Elektromotor (500) eine in der Sensoraufnahme (150) aufgenommenen Sensorplatine (550) zur Drehlagenerfassung der Rotorwelle (560) aufweist, wobei die Sensorplatine (550) zwischen dem nichtabtriebsseitigen Lagerschild (100) und dem abtriebsseitigen Lagerschild (200) angeordnet ist, vorzugsweise zwischen einer Unterseite (US) des Lagerschild (100) und dem Statorblechpaket (530).

10. Bürstenloser Elektromotor (500) nach Anspruch 8 oder 9,
**dadurch gekennzeichnet, dass** der bürstenlose Elektromotor (500) einen abtriebsseitig angeordneten Lüfter (570) aufweist.
